# EUROPÄISCHE PATENTSCHRIFT

(11) **EP 0 472 562 B1**
(45) Veröffentlichungstag und Bekanntmachung des Hinweises auf die Patenterteilung: **27.10.1993**
(21) Anmeldenummer: 90907013.8
(22) Anmeldetag: 12.05.1990
(51) Int. Cl.: B23B 29/034

(54) **WERKZEUG MIT MINDESTENS EINEM RADIAL VERSTELLBAREN WERKZEUGHALTER**
TOOL WITH AT LEAST ONE RADIALLY ADJUSTABLE TOOL HOLDER
OUTIL AVEC AU MOINS UN SUPPORT REGLABLE DANS LE SENS RADIAL

(30) Priorität: 20.05.1989 DE 3916565
(43) Veröffentlichungstag der Anmeldung: 04.03.1992
(73) Patentinhaber: KOMET Präzisionswerkzeuge Robert Breuning GmbH, D-74354 Besigheim (DE)
(72) Erfinder: MÜNDLEIN, Werner, D-7120 Bietigheim-Bissingen (DE); SCHEER, Gerhard, D-7121 Löchgau (DE); SCHNEIDER, Eberhard, D-7122 Besigheim (DE)
(74) Vertreter: Wolf, Eckhard, Dr.-Ing.
(86) Internationale Anmeldenummer: EP9000770
(87) Internationale Veröffentlichungsnummer: WO9014187

(56) Entgegenhaltungen:
- CH-A- 481 703
- US-A- 3 069 932
- US-A- 4 229 128

## Beschreibung

Die Erfindung betrifft ein Werkzeug nach dem Oberbegriff des Anspruchs 1 (CH-A-481703).

Es ist weiter ein Werkzeug bekannt (DE-PS 2533495), das zwei um 180° versetzt zueinander angeordnete, radial verstellbare Werkzeughalter aufweist, die mit einer gemeinsamen Klemmplatte am Grundkörper festlegbar sind und deren Schraubengetriebe als in einer Gewindebohrung der Klemmplatte in Verschieberichtung des Werkzeughalters geführte, mit ihrer Spitze gegen einen Vorsprung des Werkzeughalters anliegende Gewindespindeln ausgebildet sind. Durch das bekannte Schraubengetriebe wird also eine Schraubung in eine Schiebung umgesetzt. Im Normalbetrieb haben die Gewindespindeln ausschließlich eine Verstellfunktion bei der Radialverstellung der Werkzeughalters. Die Verspannung der Werkzeughalter mit dem Grundkörper erfolgt ausschließlich durch die gemeinsame Klemmplatte, die durch zwei voneinander unabhängig lösbare, durch Langlöcher in den Werkzeughaltern hindurchgreifende Schrauben am Grundkörper festlegbar ist. Wenn die Werkzeughalter durch die Klemmplatte richtig eingespannt sind, so sorgt eine Flächenverzahnung für einen zur Aufnahme der Schnittkräfte ausreichenden Form- und Kraftschluß. Kommt es beim Bearbeitungsvorgang jedoch zu einem "Crash", so können die an den Werkzeughaltern in Zahnrichtung der Flächenverzahnung auftretenden Kräfte so groß werden, daß die Spannkräfte der Klemmplatte überschritten werden. In diesem Fall wird ein Teil der Kräfte auf das Schraubengetriebe übertragen, was bei der bekannten Anordnung zu einer Verbiegung der Gewindespindeln und damit zu einer oft nicht mehr reparablen Beschädigung des Werkzeugs führen kann. Hinzu kommt, daß die Schraubengetriebe freiliegend am Kopf des Werkzeugs angeordnet und schon deshalb der Gefahr einer raschen Verschmutzung und Beschädigung ausgesetzt sind.

Ausgehend hiervon liegt der Erfindung die Aufgabe zugrunde, das bekannte Werkzeug dahingehend zu verbessern, daß Beschädigungen des Schraubengetriebes auch im Falle einer Bruchbearbeitung weitgehend vermieden werden.

Zur Lösung dieser Aufgabe werden gemäß der Erfindung die im Anspruch 1 angegebenen Merkmale vorgeschlagen. Weitere vorteilhafte Ausgestaltungen und Weiterbildungen der Erfindung ergeben sich aus den abhängigen Ansprüchen.

Mit der erfindungsgemäßen Lösung werden Maßnahmen getroffen, die einer raschen Verschmutzung und einer nicht mehr reparierbaren plastischen Verformung der Gewindespindel des Schraubengetriebes entgegenwirken.

Der wichtigste Schritt in dieser Richtung wird gemäß der Erfindung darin gesehen, daß das Schraubengetriebe eine mit ihren beiden Enden drehbar und unverschiebbar im Grundkörper gelagerte Gewindespindel und einen mit einem Mutterngewinde auf der Gewindespindel angeordneten, in einer Kulissenführung des Grundkörpers geführten, lösbar mit dem Werkzeughalter kuppelbaren Kulissenstein aufweist.

Es ist zwar grundsätzlich möglich, den Kulissenstein mit einem Mitnehmerzapfen zu versehen, der in eine entsprechende randoffene Aussparung am Werkzeughalter eingreift. Allerdings hat sich diese Anordnung insofern als problematisch erwiesen, als im Bruchfalle ein Teil der Kräfte durch Hebelwirkung über den starr am Kulissenstein angeordneten Mitnehmerzapfen unmittelbar auf das Schraubengetriebe mit der Folge einer nicht mehr reparablen Verbiegung der Gewindespindel übertragen werden kann.

Gemäß einer bevorzugten Ausgestaltung der Erfindung wird daher vorgeschlagen, daß der Mitnehmerzapfen nicht mit dem Kulissenstein, sondern mit dem Werkzeughalter starr verbunden ist, so daß er sich im Bruchfalle plastisch verformen oder aus dem Kulissenstein lösen kann, ohne daß es zu übermäßigen Biegebeanspruchungen der Gewindespindel kommt. Vorteilhafterweise ist dabei der in die randoffene Aussparung des Kulissensteins eingreifende Mitnehmerzapfen unter Belastung leichter plastisch verformbar als die Flanken der randoffenen Aussparung und die Gewindespindel. Der Mitnehmerzapfen weist also zweckmäßig eine Sollbiege- oder Sollbruchstelle auf, die entweder als Quernut im Zapfenkopf oder als Querschnittsverengung im Schaft des Mitnehmerzapfens ausgebildet sein kann. Eine weitere vorteilhafte Maßnahme in dieser Richtung besteht darin, daß der Mitnehmerzapfen einen an den Flanken der randoffenen Aussparung abrollbaren balligen Kopf aufweist. Bei größeren Bruchkräften kann grundsätzlich auch noch eine Verformung des Kulissensteins in Kauf genommen werden, wenn dadurch die plastische Verformung der Gewindespindel vermieden wird.

Gemäß einer weiteren vorteilhaften Ausgestaltung der Erfindung ist die Gewindespindel mit vorzugsweise kugelförmigen balligen Enden in offenen Kugelpfannen und/oder Kugelringpfannen des Grundkörpers gelagert. Dadurch ist die Gewindespindel an ihren Enden nicht im Lager eingespannt, sondern kann etwaigen beim Bruch auftretenden Seitenkräften ohne übermäßige Biegebeanspruchung im Lager ausweichen, ohne daß es zu einer plastischen Verformung kommt. Um die Gewindespindel auch in diesem Falle axial spielfrei zu halten, ist zumindest eine der Kugelringpfannen als lose Ringscheibe ausgebildet, die mittels einer in einer Gewindebohrung des Grundkörpers geführten Gewindehülse in axialer Richtung spielfrei gegen die Gewindespindel angedrückt ist. Diese Anordnung hat zusätzlich den Vorteil, daß die Gewindespindel einen mit radialem Spiel durch eine zentrale Bohrung der Gewindehülse hindurchgreifenden, von außen her vorzugsweise mittels eines Schraubendrehers oder Schraubenschlüssels verdrehbaren Betätigungszapfen aufweisen kann. In diesem Falle können die Gewindehülse und der Betätigungszapfen an ihren nach außen weisenden Stirnflächen eine die Drehlage der Gewindespindel und damit die Verschiebelage des Kulissensteins anzeigende Ringskala tragen.

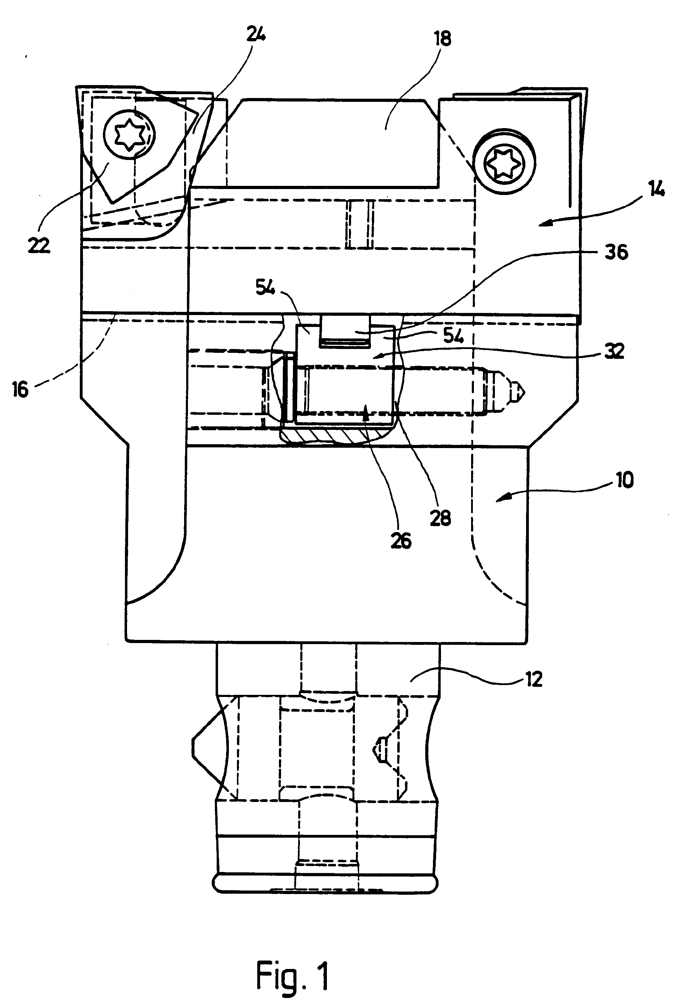

Im folgenden wird die Erfindung anhand einiger in der Zeichnung in schematischer Weise dargestellter Ausführungsbeispiele näher erläutert. Es zeigen
- Fig. 1: eine Seitenansicht eines Doppelschneiden-Schruppwerkzeugs mit radial verstellbaren Werkzeughaltern in teilweise geschnittener Darstellung;

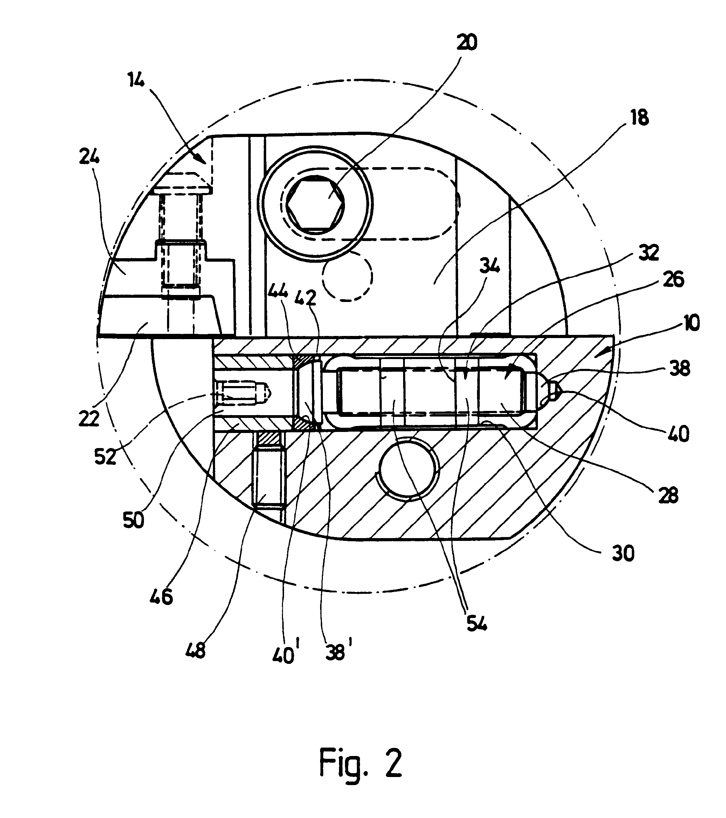

- Fig. 2: eine Draufsicht (oben) auf und einen Horizontalschnitt (unten) durch das Werkzeug nach Fig. 1;
- Fig. 3: einen Ausschnitt aus Fig. 1 mit abgewandeltem Mitnehmerzapfen;
- Fig. 4: einen Ausschnitt aus Fig. 1 mit einer weiteren Abwandlung des Mitnehmerzapfens.

Das in der Zeichnung dargestellte Doppelschneiden-Schruppwerkzeug besteht im wesentlichen aus einem einen Paßzapfen 12 für den Anschluß an eine Maschinenspindel tragenden Grundkörper 10, zwei relativ zum Grundkörper 10 radial längs einer Flächenverzahnung 16 verstellbaren und am Grundkörper 10 mittels einer Klemmplatte 18 und Befestigungsschrauben 20 befestigbaren Werkzeughaltern 14 sowie je einer an den Werkzeughaltern axial verstellbar angeordneten, eine als Wendeplatte 22 ausgebildete Schneidplatte tragenden Wechselkassette 24.

Zur Radialverstellung der Werkzeughalter 14 ist im Grundkörper 10 für jeden Werkzeughalter ein Schraubengetriebe 26 angeordnet, das eine in Verschieberichtung des betreffenden Werkzeughalters 14 ausgerichtete Gewindespindel 28 und einen mit einem Mutterngewinde auf der Gewindespindel 28 angeordneten, in einer Kulissenführung 30 des Grundkörpers 10 geführten Kulissenstein 32 aufweist. Der Kulissenstein 32 weist eine zum benachbarten Werkzeughalter 14 hin offene, als Quernut ausgebildete Aussparung 34 auf, in die ein über die mit der Flächenverzahnung 16 versehene Führungsfläche des Werkzeughalters 14 überstehender Mitnehmerzapfen 36 eingreift. Die Gewindespindel 28 ist mit ihren kugelförmig balligen Enden 38,38' in offenen Kugelringpfannen 40,40' drehbar und axial unverschiebbar gelagert. Dabei ist die Kugelpfanne 40 unmittelbar in das Grundkörpermaterial eingeformt, während die Kugelringpfanne 40' in einen lose in eine zur Kulissenführung 30 benachbarte Bohrung eingesetzten Ringkörper 44 eingeformt ist, der mit Hilfe einer in einem Innengewinde des Grundkörpers 10 geführten Gewindehülse 46 spielfrei axial gegen das Ende 38' der Gewindespindel 28 angedrückt ist. Die Gewindehülse 46 wird in ihrer eingedrehten Endstellung mit Hilfe eines in einer quer verlaufenden Gewindebohrung eingedrehten Gewindestifts 48 gesichert. Die Gewindespindel 28 trägt an ihrem Ende 38' einen axial überstehenden Betätigungszapfen 50, der durch die zentrale Bohrung der Gewindehülse 46 mit radialem Spiel hindurchgreift. An seinem freien Ende weist der Betätigungszapfen 50 ein Mehrkantloch 52 für einen Innensechskantschlüssel auf, mit dem die Gewindespindel 28 unter Verschieben des Kulissensteins 32 gedreht werden kann.

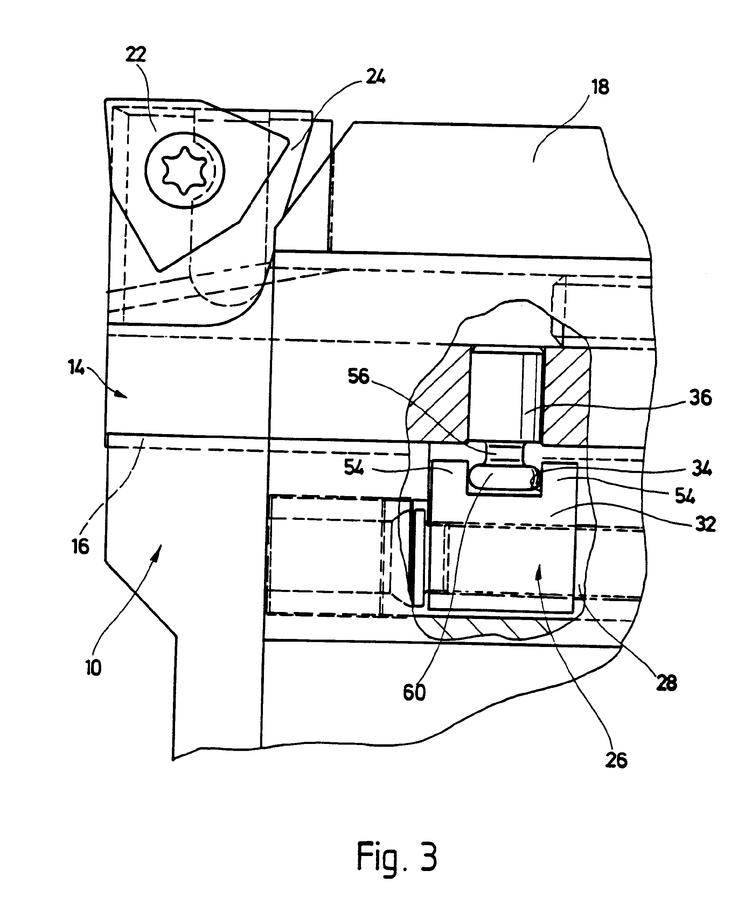

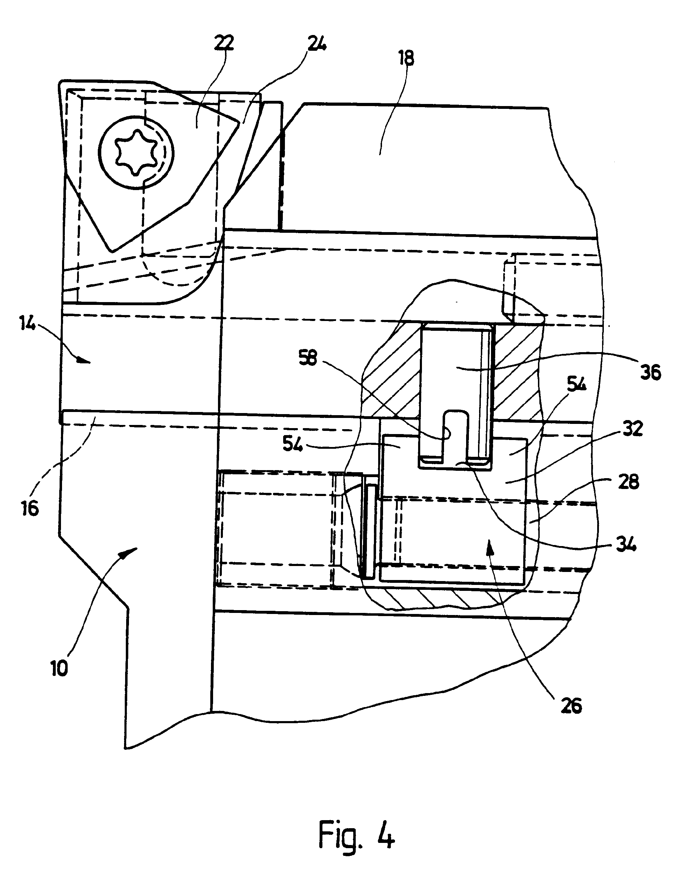

Um im Crash-Falle eine bleibende Biegung der Gewindespindel 28 zu vermeiden, wird im Bereich des Mitnehmerzapfens 36 eine "Knautschzone" gebildet, die etwaige Energiespitzen durch Verformungsarbeit abbaut und von der Gewindespindel 28 fernhält. Diese Verformung findet vorzugsweise im Bereich des Mitnehmerzapfens 36 und gegebenenfalls im Bereich der Flanken 54 der Aussparung 34 statt. Wie aus den Fig. 3 und 4 zu ersehen ist, kann zu diesem Zweck am Mitnehmerzapfen 36 eine Querschnittsverengung 56 im Schaftbereich oder eine Quernut 58 im Kopfbereich als Sollbiege- oder Sollbruchstelle vorgesehen werden. Der Mitnehmerzapfen 36 sollte deshalb auch aus plastisch verformbarem, beispielsweise ungehärtetem oder vorgehärtetem Stahl bestehen. Weiter trägt auch die in Fig. 3 gezeigte ballige Ausbildung des Mitnehmerzapfenkopfes 60 dazu bei, daß der Zapfenkopf im Falle einer Verformung des Schafts an den Flanken 54 der Aussparung 34 gegebenenfalls ohne Beschädigung der Flanken 54 abrollen kann.

Weiter tragen die in den Kugelringpfannen 40,40' gelagerten balligen Enden 38,38' der Gewindespindel 28 dazu bei, daß die Gewindespindel 28 an ihren Lagerstellen nicht radial eingespannt ist und daher etwaigen Querkräften ohne bleibende Verformung elastisch ausweichen kann.

## Patentansprüche

1. Werkzeug für den Einsatz in Werkzeugmaschinen mit einem Grundkörper (10) und mindestens einem mittels eines Schraubengetriebes (26) radial gegenüber dem Grundkörper (10) verstellbaren und an diesem lösbar festlegbaren, mindestens eine Schneidplatte (22) tragenden Werkzeughalter (14), wobei das Schraubengetriebe (26) eine mit ihren beiden Enden (38,38') drehbar und unverschiebbar im Grundkörper (10) gelagerte Gewindespindel (28) und einen mit einem Muttergewinde auf der Gewindespindel (28) angeordneten, in einer Kulissenführung (30) des Grundkörpers (10) geführten, lösbar mit dem Werkzeughalter (14) kuppelbaren Kulissenstein (32) aufweist, **da****durch gekennzeichnet**, daß im Kulissenstein (32) eine zum Werkzeughalter (14) hin randoffene Aussparung (34) angeordnet ist, in die ein am Werkzeughalter angeordneter Mitnehmerzapfen (36) eingreift, und daß der Mitnehmerzapfen (36) eine unter Belastung plastisch verbiegbare oder trennbare Sollbiegestelle oder Sollbruchstelle aufweist.

2. Werkzeug nach Anspruch 1, **dadurch gekennzeichnet,** daß der Werkzeughalter (14) längs einer Flächenverzahnung (16) radial gegenüber dem Grundkörper (10) verstellbar ist.

3. Werkzeug nach Anspruch 1 oder 2, **dadurch gekennzeich-** **net,** daß die randoffene Aussparung (34) als quer zur Kulissenführung (30) verlaufende Nut ausgebildet ist.

4. Werkzeug nach einem der Ansprüche 1 bis 3, **dadurch** **gekennzeichnet,** daß der Mitnehmerzapfen (36) unter Belastung leichter plastisch verformbar ist als die Flanken (54) der randoffenen Aussparung (34) und die Gewindespindel.

5. Werkzeug nach einem der Ansprüche 1 bis 4, **dadurch** **gekennzeichnet,** daß die Sollbiegestelle oder Sollbruchstelle durch eine Querschnittsverengung (56,58) im Mitnehmerzapfen gebildet ist.

6. Werkzeug nach Anspruch 5, **dadurch gekennzeichnet,** daß die Sollbiegestelle oder Sollbruchstelle durch eine zum Kulissenstein (32) hin offene, quer zur Kulissenführung (30) verlaufende Quernut (58) im Mitnehmerzapfen (36) gebildet ist.

7. Werkzeug nach Anspruch 5, **dadurch gekennzeichnet,** daß die Sollbiegestelle oder Sollbruchstelle durch eine Querschnittsverengung (56) im Schaft des Mitnehmerzapfens (36) gebildet ist.

8. Werkzeug nach einem der Ansprüche 2 bis 7, **dadurch** **gekennzeichnet,** daß die Flanken (54) der randoffenen Aussparung (34) des Kulissensteins (32) unter Belastung leichter plastisch verformbar sind als die Gewindespindel (28).

9. Werkzeug nach einem der Ansprüche 1 bis 8, **dadurch** **gekennzeichnet,** daß der Mitnehmerzapfen (36) einen an den Flanken (54) der randoffenen Aussparung (34) abrollbaren balligen Kopf (60) aufweist.

10. Werkzeug nach einem der Ansprüche 1 bis 9, **dadurch** **gekennzeichnet,** daß der Mitnehmerzapfen (36) aus ungehärtetem oder vergütetem Stahl besteht.

11. Werkzeug nach einem der Ansprüche 1 bis 10, **dadurch** **gekennzeichnet,** daß der aus Stahl bestehende Kulissenstein (32) zumindest im Bereich der Aussparungsflanken (54) ungehärtet oder vergütet ist.

12. Werkzeug nach einem der Ansprüche 1 bis 11, **dadurch** **gekennzeichnet,** daß die Gewindespindel (28) mit kugelförmigen balligen Enden (38,38') in offenen Kugelpfannen und/oder Kugelringpfannen (40,40') des Grundkörpers (10) gelagert ist.

13. Werkzeug nach Anspruch 12, **dadurch gekennzeichnet,** daß zumindest eine der Kugelringpfannen (40') als lose in eine Bohrung (42) des Grundkörpers (10) eingesetzter Ringkörper (44) ausgebildet ist, der mittels einer in einer Gewindebohrung des Grundkörpers geführten Gewindehülse (46) in axialer Richtung spielfrei gegen die Gewindespindel (28) angedrückt ist.

14. Werkzeug nach Anspruch 13, **dadurch gekennzeichnet,** daß die Gewindespindel (28) einen mit radialem Spiel durch eine zentrale Bohrung der Gewindehülse (46) hindurchgreifenden, von außen her vorzugsweise mittels eines Schraubendrehers oder Schraubenschlüssels verdrehbaren Betätigungszapfens (50) aufweist.

15. Werkzeug nach Anspruch 14, **dadurch gekennzeichnet,** daß die Gewindehülse (46) und der Betätigungszapfen (50) an ihren nach außen weisenden Stirnflächen eine die Drehlage der Gewindespindel (28) und damit die Verschiebelage des Kulissensteins (32) und des Werkzeughalters (14) anzeigende Ringskala tragen.

## Claims

1. Tool for the use in machine tools, comprising a main body (10̸) and at least one tool holder (14), which is radially adjustable to the main body (10̸) by means of a worm drive (26) and releasably fixed thereto and which carries at least one cutting plate (22), in which respect the worm drive (26) comprises a worm-gear spindle (28), which is with both its ends (38, 38') rotatably and indisplaceably mounted in the main body (10̸), and a gate block (32), which is arranged with a nut thread on the worm-gear spindle (28) and guided in a gate guide (30̸) of the main body (10̸) and detachably coupled to the tool holder (14), **characterised in that** the gate block (32) is provided with a cut-out (34), which is open-edged towards the tool holder (14) and into which engages a drive pin (36) which is arranged on the tool holder, and that the drive pin (36) comprises a flexural or breaking zone which plastically bends or breaks under load.

2. Tool according to claim 1, **characterised in that** the tool holder (14) is adjustable radially to the main body (10̸) along a surface toothing (16).

3. Tool according to claim 1 or 2, **characterised in** **that** the open-edged cut-out (34) is arranged as a groove which extends transversely to the gate guide (30̸).

4. Tool according to one of claims 1 to 3, **characterised in that** the drive pin (36) whilst under load is easier plastically deformed than the flanks (54) of the open-edged cut-out (34) and the worm-gear spindle.

5. Tool according to one of claims 1 to 4, **characterised in that** the flexural location or breaking location is formed by a cross-sectional narrowing (56, 58) in the drive pin.

6. Tool according to claim 5, **characterised in that** the flexural location or breaking location is formed by a transverse groove (58) in the drive pin (36), which is open towards the gate block (32) and which extends transversely to the gate guide (30̸).

7. Tool according to claim 5, **characterised in that** the flexural location or breaking location is formed by a cross-sectional narrowing (56) in the shaft of the drive pin (36).

8. Tool according to one of claims 2 to 7, **characterised in that** the flanks (54) of the open-edged cut-out (34) of the gate block (32) whilst under load are easier plastically deformable than the worm-gear spindle (28).

9. Tool according to one of claims 1 to 8, **characterised in that** the drive pin (36) comprises a spherical head (60̸) which rolls off on the flanks (54) of the open-edged cut-out (34).

10. Tool according to one of claims 1 to 9, **characterised in that** the drive pin (36) is made of soft or hardened steel.

11. Tool according to one of claims 1 to 10̸, **characterised in that** the gate block (32), which is made of steel, is at least in the region of the cut-out flanks (54) soft or hardened.

12. Tool according to one of claims 1 to 11, **characterised in that** the worm-gear spindle (28) is mounted with ballshaped spherical ends (38, 38') in open ball sockets and/or ballrace sockets (40̸, 40̸') of the main body (10̸).

13. Tool according to claim 12, **characterised in** **that** at least one of the ballrace sockets (40̸') is arranged as an annular body (44), which is loosely seated in a bore (42) of the main body (10̸) and which is pressed free of play in the axial direction against the worm-gear spindle (28) by means of a threaded sleeve (46) which is guided in a threaded bore of the main body.

14. Tool according to claim 13, **characterised in** **that** the worm-gear spindle (28) comprises an operating pin (50̸), which passes with radial play through a central bore of the threaded sleeve (46) and which is rotatable from the outside, preferably by means of a screwdriver or a spanner.

15. Tool according to claim 14, **characterised in** **that** the threaded sleeve (46) and the operating pin (50̸) have at the outward facing ends an annular dial which indicates the rotational position of the worm-gear spindle (28), and thus the displacement position of the gate block (32) and of the tool holder (14).

## Revendications

1. Outil pour usage sur machines-outils, comportant un corps de base (10) et au moins un porte-outil (14) mobile radialement par rapport à ce corps de base (10) au moyen d'un mécanisme à vis (26) et pouvant être fixé à ce corps de base (10) et portant au moins une plaquette coupante (14), le mécanisme à vis (26) présentant une tige filetée (28) montée tournante et immobile axialement dans le corps de base (10) par ses deux extrémités (38, 38') et un coulisseau (32) monté sur cette tige filetée (28) par un filetage d'écrou, guidé dans une coulisse (30) du corps de base (10) et pouvant être accouplé au porte-outil (14), caractérisé par le fait que dans le coulisseau (32) est fait un évidement (34) ouvert au bord vers le porte-outil (14) dans lequel s'engage un tenon d'entraînement (36) situé sur le porte-outil, et que ce tenon d'entraînement (36) présente un endroit de flexion ou de rupture pouvant fléchir plastiquement ou sectionnable en charge.

2. Outil selon la revendication 1, caractérisé par le fait que le porte-outil (14) est mobile radialement par rapport au corps de base (10) le long d'une denture de surface (16).

3. Outil selon l'une des revendications 1 et 2, caractérisé par le fait que l'évidement ouvert au bord (34) est une rainure s'étendant perpendiculairement à la coulisse (30).

4. Outil selon l'une des revendications 1 à 3, caractérisé par le fait que le tenon d'entraînement (36) est, en charge, déformable plastiquement plus facilement que les flancs (54) de l'évidement ouvert au bord (34) et que la tige filetée.

5. Outil selon l'une des revendications 1 à 4, caractérisé par le fait que l'endroit de flexion ou de rupture est formé par un rétrécissement de section (56, 58) du tenon d'entraînement.

6. Outil selon la revendication 5, caractérisé par le fait que l'endroit de flexion ou de rupture est formé par une rainure tranversale (58) ouverte vers le coulisseau (32) et s'étendant perpendiculairement à la coulisse (30) faite dans le tenon d'entraînement (36).

7. Outil selon la revendication 5, caractérisé par le fait que l'endroit de flexion ou de rupture est formé par un rétrécissement de section (56) fait sur la tige du tenon d'entraînement (36).

8. Outil selon l'une des revendications 2 à 7, caractérisé par le fait que les flancs (54) de l'évidemént ouvert au bord (34) du coulisseau (32) sont, en charge, déformables plastiquement plus facilement que la tige filetée (28).

9. Outil selon l'une des revendications 1 à 8, caractérisé par le fait que le tenon d'entraînement (36) présente une tête bombée (60) pouvant rouler sur les flancs (54) de l'évidement ouvert au bord (34).

10. Outil selon l'une des revendications 1 à 9, caractérisé par le fait que le tenon d'entraînement (36) est en acier non trempé ou trempé et revenu.

11. Outil selon l'une des revendications 1 à 10, caractérisé par le fait que le coulisseau (32), en acier, est non trempé ou trempé et revenu au moins dans la zone des flancs (54) de l'évidement.

12. Outil selon l'une des revendications 1 à 11, caractérisé par le fait que la tige filetée (28) est montée par des extrémités bombées sphériques (38, 38') dans des cuvettes sphériques et/ou des cuvettes en forme d'anneau sphérique ouvertes (40, 40') du corps de base (10).

13. Outil selon la revendication 12, caractérisé par le fait qu'au moins une des cuvettes en forme d'anneau sphérique (40') est constituée d'un corps annulaire (44) monté librement dans un alésage (42) du corps de base (10) et serré dans la direction axiale, sans jeu, contre la tige filetée (28) au moyen d'une douille filetée (46) vissée dans un taraudage du corps de base.

14. Outil selon la revendication 13, caractérisé par le fait que la tige filetée (28) présente un téton de manoeuvre (50) traversant avec jeu radial un alésage central de la douille filetée (46) et pouvant être tourné de l'extérieur de préférence au moyen d'un tournevis ou d'une clé.

15. Outil selon la revendication 14, caractérisé par le fait que la douille filetée (46) et le téton de manoeuvre (50) portent sur leur face frontale dirigée vers l'extérieur une échelle circulaire indiquant la position angulaire de la tige filetée (28) et ainsi la position du coulisseau (32) et du porte-outil (14).
